# EUROPÄISCHE PATENTSCHRIFT

(11) **EP 3 531 547 B1**
(45) Veröffentlichungstag und Bekanntmachung des Hinweises auf die Patenterteilung: **14.09.2022**
(21) Anmeldenummer: 18157775.0
(22) Anmeldetag: 21.02.2018
(51) Int. Cl.: H02M 5/27, H02M 5/452, H02P 1/52, H02P 9/48, H02P 27/16

(54) **BETRIEBSSCHALTUNG ZUR KOPPLUNG EINER SYNCHRONMASCHINE MIT EINEM SPANNUNGSNETZ UND VERFAHREN ZU DEREN BETRIEB**
OPERATING CIRCUIT FOR COUPLING OF A SYNCHRONOUS MACHINE WITH A VOLTAGE NETWORK AND METHOD FOR THE OPERATION OF SAME
CIRCUIT DE COMMANDE PERMETTANT DE COUPLER UNE MACHINE SYNCHRONE AVEC UN RÉSEAU DE TENSION ET PROCÉDÉ DE FONCTIONNEMENT DUDIT CIRCUIT

(43) Veröffentlichungstag der Anmeldung: 28.08.2019
(73) Patentinhaber: GE Energy Power Conversion Technology Limited, Rugby Warwickshire CV21 1BU (GB)
(72) Erfinder: RESCHBERGER, Stefan, 12277 Berlin (DE); HILDEBRANDT, Hani Sebastian, 12277 Berlin (DE)
(74) Vertreter: Rüger Abel Patentanwälte PartGmbB

(56) Entgegenhaltungen:
- AT-B- 315 301
- DE-A1- 1 588 058
- DE-A1- 1 951 186
- DE-A1- 2 247 867
- DE-B2- 1 588 058
- SU-A1- 671 011
- MOHLENKAMP G: "INVERTER MOTOR WITH SINUSOIDAL STARTING CURRENTS. ÖA SURVEY", EUROPEAN TRANSACTIONS ON ELECTRICAL POWER ENGINEERING, VDE VERLAG, DE, Bd. 4, Nr. 1, 1. Januar 1994 (1994-01-01), Seiten 13-20, XP000443214, ISSN: 0939-3072

## Beschreibung

Die Erfindung betrifft eine Betriebsschaltung zur Kopplung einer Synchronmaschine mit einem Spannungsnetz sowie ein Verfahren zum Betreiben einer Synchronmaschine mittels einer Betriebsschaltung.

Synchronmaschinen werden häufig in Kraftwerken verwendet, um im Generatorbetrieb elektrische Energie für ein Spannungsnetz bereitzustellen. Dabei ist es erforderlich, dass die Betriebsschaltung lastunabhängig eine möglichst konstante Frequenz einer Wechselspannung für das Spannungsnetz bereitstellt. Die Betriebsschaltung muss auch ein Anfahren der Synchronmaschine ermöglichen, die im Gegensatz zu einer Asynchronmaschine keinen Schlupf zwischen dem Rotorfeld und dem Statorfeld ermöglicht.

Bei solchen Betriebsschaltungen spielt die Energieeffizienz eine außerordentlich große Rolle. Bei Kraftwerken werden hohe Leistungen und über die Betriebsdauer viel elektrische Energie erzeugt. Bereits geringe Verbesserungen im Bereich einiger Zehntel Prozent des Wirkungsgrades der Betriebsschaltung haben im Hinblick auf die Wirtschaftlichkeit eines Kraftwerks eine enorme Bedeutung.

Heutzutage werden bei solchen Betriebsschaltungen häufig Konverterschaltungen mit einem Gleichspannungszwischenkreis verwendet, um eine Wechselspannungsfrequenz für das Spannungsnetz an eine Wechselspannungsfrequenz des Generators anzupassen. Die vom Generator erzeugte Wechselspannung wird zunächst gleichgerichtet und die gleichgerichtete Spannung wird in einem Gleichspannungszwischenkreis bereitgestellt. In der Regel ist im Gleichspannungszwischenkreis ein Kondensator zum Glätten und Puffern der gleichgerichteten Spannung angeordnet. Die gleichgerichtete Spannung des Gleichspannungszwischenkreises wird anschließend in einer Wechselrichterstufe in die Wechselspannung des Spannungsnetzes umgewandelt und ist somit unabhängig von der Wechselspannungsfrequenz des Generators. Solche Wechselrichter sind beispielsweise unter der Bezeichnung VSI (Voltage-Source-Inverter) bekannt. Die Wechselrichter mit einem Gleichspannungszwischenkreis haben einen Wirkungsgrad von ca. 98%.

DE 2 247 867 A1 offenbart eine Betriebsschaltung gemäß dem Oberbegriff des Patentanspruches 1.

DE 1 951 186 offenbart eine Betriebsschaltung zum Starten und zum Betrieb einer Synchronmaschine mit einem Konverter der einen einzelnen Konverterzweig nach Art der Erfindung enthält. Eine Umschalteinrichtung ermöglicht die Umschaltung zwischen einer Konfiguration als Direktumrichter mit einphasiger Einspeisung zum Anfahren der Maschine und einer Konfiguration als netz- und lastkommutierter Konverter für den regulären Betrieb.

SU 671011 A1 beschreibt eine Betriebsschaltung mit einem Synchronmotor für den Frequenzanlauf.

Aus DE 1 588 058 A1 ist eine Vorrichtung zur Anlaufsteuerung von Stromrichtermotoren mit fremdgeführten Zwischenkreisumrichtern bekannt.

G. Möhlenkamp, "Inverter Motor with Sinusoidal Starting Currents - A Survey", European Transactions on Electrical Power Engineering, VDE Verlag, Band 4, 01. Januar 1994 beschreibt einen Konverter, der in einem Cyklo-Konvertermodus arbeiten kann. Der Konverter hat für jede Phase einen Gleichspannungszwischenkreis.

AT 315 301 B beschreibt eine Anfahreinrichtung für einen Generator einer Turbine. Die Anfahreinrichtung weist einen Gleichstromzwischenkreis auf, an den ein Gleichrichter und ein Wechselrichter angeschlossen sind.

Ausgehend von den bekannten Betriebsschaltungen kann es als Aufgabe der Erfindung angesehen werden, die Effizienz des Betriebs einer Synchronmaschine, beispielsweise eines Kraftwerks, zu verbessern.

Diese Aufgabe wird durch eine Betriebsschaltung mit den Merkmalen des Patentanspruches 1, sowie ein Verfahren mit den Merkmalen des Patentanspruches 12 gelöst.

Die erfindungsgemäße Betriebsschaltung ist zur Kopplung einer Synchronmaschine mit einem Spannungsnetz eingerichtet. Die Synchronmaschine und die Betriebsschaltung sind beispielsweise Bestandteil eines Kraftwerks, wie etwa eines Wasserkraftwerks, Windkraftwerks, Schiffes, usw., das elektrische Leistung (Wirkleistung und/oder Blindleistung) an das Spannungsversorgungsnetz abgeben bzw. aus dem Spannungsversorgungsnetz aufnehmen kann.

Die Betriebsschaltung hat eine Konverterschaltung, die durch eine Steuereinheit ansteuerbar ist. Die Konverterschaltung weist einen mit der Synchronmaschine verbindbaren Konvertereingang und einen mit dem Spannungsnetz verbindbaren Konverterausgang auf. Die Konverterschaltung hat mehrere Konverterschalter sowie eine Umschaltanordnung. Die Konverterschalter und die Umschaltanordnung sind durch die Steuereinheit ansteuerbar.

Mittels der Umschaltanordnung kann die Konverterschaltung zwischen wenigstens zwei Konfigurationen umgeschaltet werden, einer Start-Konverterkonfiguration und einer Direktkonverterkonfiguration. In der Start-Konverterkonfiguration kann die Synchronmaschine als Motor betrieben und angefahren werden. In der Direktkonverterkonfiguration arbeitet die Synchronmaschine als Generator und elektrische Energie für das Spannungsnetz bereitstellen. In der Direktkonverterkonfiguration ist kein Gleichspannungszwischenkreis vorhanden und die Wechselspannung am Konvertereingang wird ohne Zwischenumwandlung in eine Gleichspannung unmittelbar in eine Wechselspannung am Konverterausgang umgewandelt. In der Direktkonverterkonfiguration wird die Wechselspannung am Konverterausgang durch die Steuereinheit derart eingestellt, dass eine vorgegebene Frequenz und optional zusätzlich ein vorgegebener Spannungswert (Maximalwert oder Effektivwert, usw.) erreicht wird, die der Netzfrequenz des Spannungsnetzes entspricht, beispielsweise 50 Hz oder 60 Hz. Demgegenüber kann in der Start-Konverterkonfiguration umgekehrt die Frequenz am Konvertereingang eingestellt werden, um einen Frequenzanlauf der Synchronmaschine zu ermöglichen.

Somit kann die Betriebsschaltung in zwei unterschiedlichen Konfigurationen betrieben werden, wobei in der Direktkonverterkonfiguration die Frequenz am Konverterausgang und in der Start-Konverterkonfiguration die Frequenz am und optional auch der Spannungswert Konvertereingang gesteuert oder geregelt werden kann.

Die Konverterschaltung hat einen hohen Wirkungsgrad, beispielsweise 99% oder mehr. Damit ist der Wirkungsgrad der erfindungsgemäßen Konverterschaltung in der Direktkonverterkonfiguration bis zu 1% größer als bei den bisher üblichen Konverterschaltungen. Beim Generatorbetrieb der Synchronmaschine in der Direktkonverterkonfiguration wirken sich beim Wechselrichten am Konvertereingang entstehende Oberwellen zwar nachteilig auf den Wirkungsgrad der Synchronmaschine aus. Dennoch kann die Betriebsschaltung insgesamt einen um etwa 0,7% bis 0,9% höheren Gesamtwirkungsgrad erzielen als die bisher bekannten Betriebsschaltungen.

Es ist vorteilhaft, wenn die Steuereinrichtung dazu eingerichtet ist, die Konverterschaltung in der Start-Konverterkonfiguration derart zu steuern, dass die Frequenz der Wechselspannung am Konvertereingang gesteuert wird. Insbesondere kann die Frequenz der Wechselspannung am Konvertereingang kontinuierlich bis zu einer Betriebsfrequenz von etwa 100-120 Hz erhöht werden. Dadurch kann beispielsweise ein Frequenzanlauf der Synchronmaschine erreicht werden.

Es ist vorteilhaft, wenn die Konverterschaltung in der Direktkonverterkonfiguration einen Direktkonverter, vorzugsweise einen sogenannten "Cyclo-Konverter" bildet. Der Direkt- bzw. Cyclo-Konverter kann beispielsweise in einer sogenannten V-Schaltung (auch als "Open Delta" bezeichnet) betrieben werden, also in einer Dreieckschaltung, bei der zwei Potentiale an einem jeweiligen Dreieckspunkt nur über das Potential des jeweils dritten Dreieckspunkts miteinander gekoppelt sind.

Die Konverterschaltung bildet in der Start-Konverterkonfiguration einen lastkommutierten Konverter bzw. Wechselrichter (auch LCI oder "Load Commutated Inverter" bzw. "Current Source Drive" genannt).

Es ist außerdem vorteilhaft, wenn die Konverterschaltung in der Start-Konverterkonfiguration wenigstens einen Gleichstromzwischenkreis oder Gleichspannungszwischenkreis aufweist. Dadurch kann eine bessere Entkopplung der Wechselspannungsfrequenz am Konvertereingang gegenüber dem Konverterausgang erreicht werden, wodurch das Anlaufen der Synchronmaschine im Motorbetrieb vereinfacht wird. Dazu können die Konverterschalter derart angesteuert werden, dass die am Konverterausgang anliegende Wechselspannung des Spannungsversorgungsnetzes zunächst in einen Gleichstrom des Gleichstromzwischenkreis oder eine Zwischenspannung des Gleichspannungszwischenkreises gleichgerichtet und anschließend in einen Wechstelstrom oder eine Wechselspannung am Konvertereingang für die Synchronmaschine wechselgerichtet wird.

Zum Anlauf der Synchronmaschine kann zusätzlich ein Anlaufmotor verwendet werden.

Die Steuereinrichtung ist dazu eingerichtet, die Konverterschaltung in der Direktkonverterkonfiguration derart anzusteuern, dass am Konverterausgang eine Wechselspannung mit einer vorgegebenen und insbesondere konstanten Frequenz anliegt, beispielsweise 50 Hz oder 60 Hz.

Die Konverterschaltung hat wenigstens zwei Konverterzweige mit jeweils einem ersten Ausgangsanschluss und jeweils einem zweiten Ausgangsanschluss des Konverterzweigs und jeweils einem ersten Eingangsanschluss und jeweils einem zweiten Eingangsanschluss und jeweils einem dritten Eingangsanschluss des Konverterzweigs aufweisen. Dabei können zwei Ausgangsanschlüsse zweier Konverterzweige unmittelbar miteinander verbunden sein, so dass sie auf demselben Potential liegen. Die Ausgangsanschlüsse können sozusagen kurzgeschlossen sein.

Erfindungsgemäß hat jeder Konverterzweig der Konverterschaltung eine Brückenschaltung mit vier ansteuerbaren Konverterschaltern für jeden Eingangsanschluss. Jeweils zwei Brückenschalter bilden einen Brückenzweig der Brückenschaltung. In einem ersten Brückenzweig ist ein erster Brückenpunkt über einen ersten Konverterschalter mit dem ersten Ausgangsanschluss und über einen zweiten Konverterschalter mit dem zweiten Ausgangsanschluss des Konverterzweigs verbunden. In einem zweiten Brückenzweig derselben Brückenschaltung ist ein zweiter Brückenpunkt über einen dritten Konverterschalter mit dem ersten Ausgangsanschluss und über einen vierten Konverterschalter mit dem zweiten Ausgangsanschluss verbunden. Eine solche Brückenschaltung ist separat für jeden vorhandenen Eingangsanschluss in einem Konverterzweig vorhanden.

Vorzugsweise hat jeder Konverterzweig genau zwölf Konverterschalter.

Die Konverterschalter sind beispielsgemäß durch jeweils einen oder alternativ durch zwei antiparallel geschaltete Halbleiterschalter gebildet. Bei einem Ausführungsbeispiel ist jeder Konverterschalter durch einen oder mehrere in Reihe geschaltete Thyristor gebildet. Mittels einer Reihenschaltung kann die Blockierspannung erhöht werden.

Es ist vorteilhaft, wenn jeder Konverterzweig eine erste Drosselspule und eine zweite Drosselspule aufweist. Beispielsweise kann die erste Drosselspule unmittelbar zwischen dem ersten Konverterschalter und dem dritten Konverterschalter und die zweite Drosselspule unmittelbar zwischen dem zweiten Konverterschalter und dem vierten Konverterschalter jeder Brückenschaltung angeordnet sein. Die Drosselspule kann in der Start-Konverterkonfiguration in einem Gleichspannungszwischenkreis angeordnet sein und sozusagen eine Zwischenkreisdrossel bilden. In der Direktkonverterkonfiguration ist die erste Drosselspule unmittelbar mit dem ersten Ausgangsanschluss und die zweite Drosselspule unmittelbar mit dem zweiten Ausgangsanschluss des jeweiligen Konverterzweigs verbunden. Bei einer Ausführungsform kann eine Anzapfung an der betreffenden Drosselspule den Ausgangsanschluss darstellen. Der Ausgangsanschluss kann auch zwischen einer Drosselspule und einem der Konverterschalter angeordnet sein.

Zum Betrieb der Synchronmaschine kann diese aus ihrem Stillstand zunächst auf eine Betriebsdrehzahl gebracht werden. Während dieses Anlaufs ist die Konverterschaltung in der Start-Konverterkonfiguration. In dieser Start-Konverterkonfiguration wird die Drehzahl der Synchronmaschine erhöht, bis die Frequenz der Wechselspannung am Konvertereingang eine Betriebsfrequenz erreicht hat. Dann kann die Konverterschaltung in die Direktkonverterkonfiguration umgeschaltet werden.

In der Direktkonverterkonfiguration wird die Synchronmaschine generatorisch betrieben.

Die Drehrichtung der Synchronmaschine wird beim Anlauf festgelegt. Soll die Drehrichtung umgekehrt werden, wird die Drehzahl verringert und sozusagen ein neuer Anlauf in die jeweils andere Drehrichtung gestartet. Die Drehrichtung kann davon abhängen, ob die Synchronmaschine - zumindest hauptsächlich - als Motor oder Generator betrieben wird. Abhängig vom aktuellen Drehmoment an einer Eingangswelle und einer Ausgangswelle der Synchronmaschine kann aber auch ohne Drehrichtungsumkehr ein Übergang vom Motorzum Generatorbetrieb (oder umgekehrt) auftreten.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:

Figur 1 ein Blockschaltbild einer Betriebsschaltung mit einer Konverterschaltung und einer Umschaltanordnung,

Figur 2 ein Blockschaltbild einer Betriebsschaltung mit einem Ausführungsbeispiel einer Konverterschaltung und einem Ausführungsbeispiel einer Umschaltanordnung,

Figur 3 ein Ersatzschaltbild der Betriebsschaltung aus Figur 2 in einer Start-Konverterkonfiguration der Konverterschaltung,

Figur 4 ein Ersatzschaltbild der Betriebsschaltung aus Figur 2 in einer Direktkonverterkonfiguration der Konverterschaltung,

Figur 5 eine beispielhafte, schematische Prinzipdarstellung der Arbeitsweise der Konverterschaltung gemäß der Figuren 1 bis 4 in der Direktkonverterkonfiguration,

Figuren 6 und 7 jeweils ein Blockschaltbild eines weiteren Ausführungsbeispiels einer Betriebsschaltung,

Figur 8 ein Blockschaltbild einer Betriebsschaltung, die insbesondere für den Betrieb einer dreiphasigen Synchronmaschine geeignet ist,

Figuren 9 und 10 jeweils ein weiteres Blockschaltbild eines Ausführungsbeispiels einer Betriebsschaltung für eine Synchronmaschine mit drei bzw. vier Wicklungssystemen, die jeweils drei Wicklungen aufweisen.

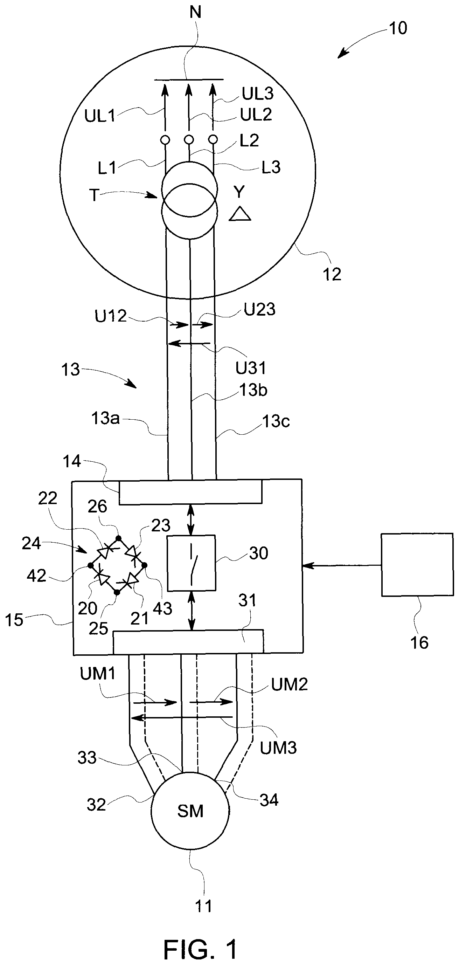

Figur 1 zeigt eine Prinzipskizze nach Art eines Blockschaltbildes einer Betriebsschaltung 10, die dazu eingerichtet ist, eine Synchronmaschine 11 mit einem Spannungsnetz 12 zu koppeln. Das Spannungsversorgungsnetz 12 ist beispielsgemäß ein dreiphasiges Spannungsversorgungsnetz. Das Spannungsversorgungsnetz 12 kann einen Transformator T aufweisen. Das Spannungsversorgungsnetz 12 ist über eine netzseitige Leitung 13 mit einem Konverterausgang 14 einer Konverterschaltung 15 elektrisch verbunden. Die netzseitige Leitung 13 hat einen ersten Leiter 13a, einen zweiten Leiter 13b und einen dritten Leiter 13c, die jeweils mit einer Phase bzw. einem Außenleiter L1, L2, L3 des Spannungsversorgungsnetzes 12 verbunden sind. Zwischen den Leitern 13a, 13b, 13c ergibt sich jeweils eine Leiternennspannung U12, U23, U31. In Bezug auf einen Neutralleiter N weist jeder Außenleiter L1, L2, L3 eine betreffende Phasennennspannung UL1, UL2, UL3 auf. Die Phasennennspannungen UL1, UL2, UL3 haben jeweils denselben Effektivwert, beispielsweise 230 V, dieselbe Frequenz, beispielsweise 50 Hz, und sind relativ zueinander um jeweils 120 Grad phasenverschoben. Der Effektivwert und die Frequenz können abhängig vom Land bzw. der Region in der Welt unterschiedlich sein.

Die Konverterschaltung 15 weist mehrere durch eine Steuereinheit 16 der Betriebsschaltung 10 ansteuerbare Konverterschalter auf. Beispielsgemäß bilden jeweils ein erster Konverterschalter 20, ein zweiter Konverterschalter 21, ein dritter Konverterschalter 22 und ein vierter Konverterschalter 23 eine gemeinsame Brückenschaltung 24. Dabei sind der erste Konverterschalter 20 und der zweite Konverterschalter 21 jeweils unmittelbar über einen ersten Brückenpunkt 25 verbunden und bilden einen ersten Brückenzweig 24a der Brückenschaltung 24, während der dritte Konverterschalter 22 und der vierte Konverterschalter 23 unmittelbar über einem gemeinsamen zweiten Brückenpunkt 26 verbunden sind und einen zweiten Brückenzweig 24b derselben Brückenschaltung 24 bilden. Die Konverterschaltung 15 weist mehrere solche Brückenschaltungen 24 auf.

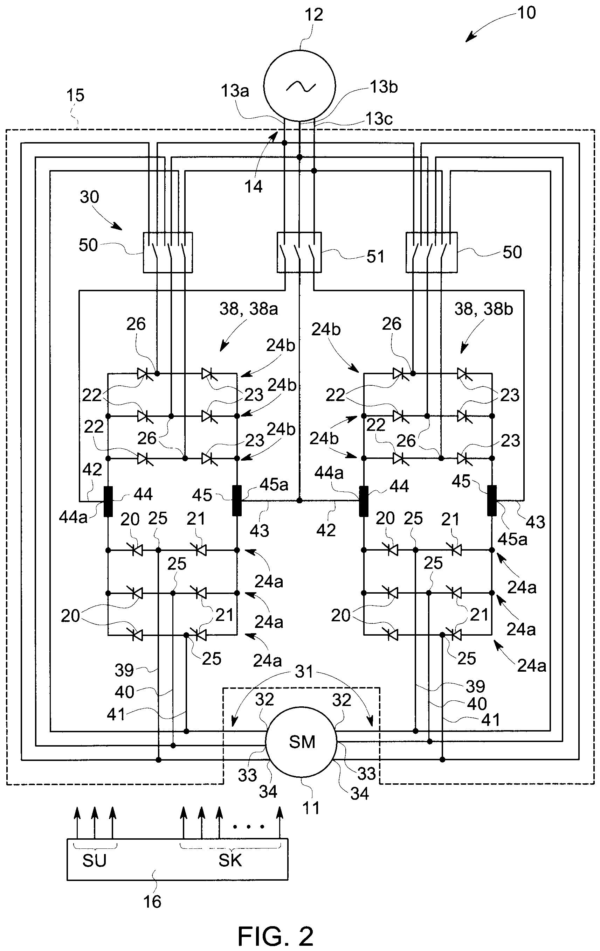

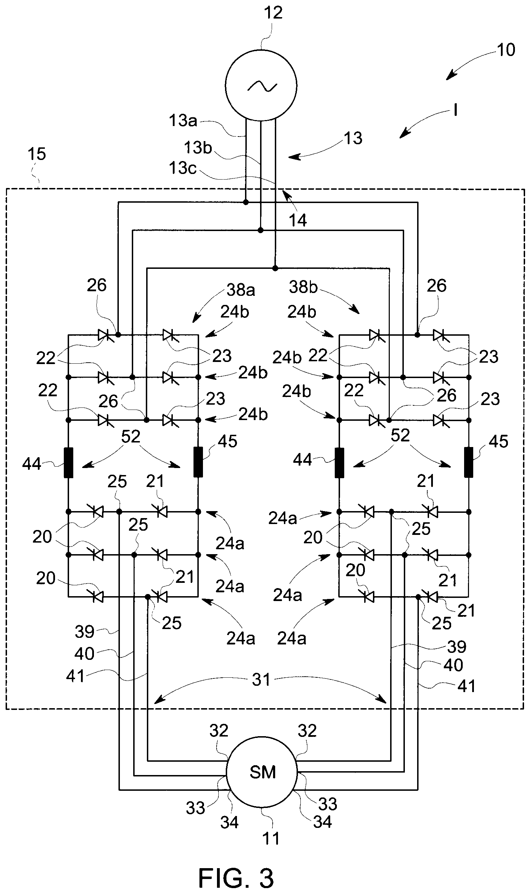

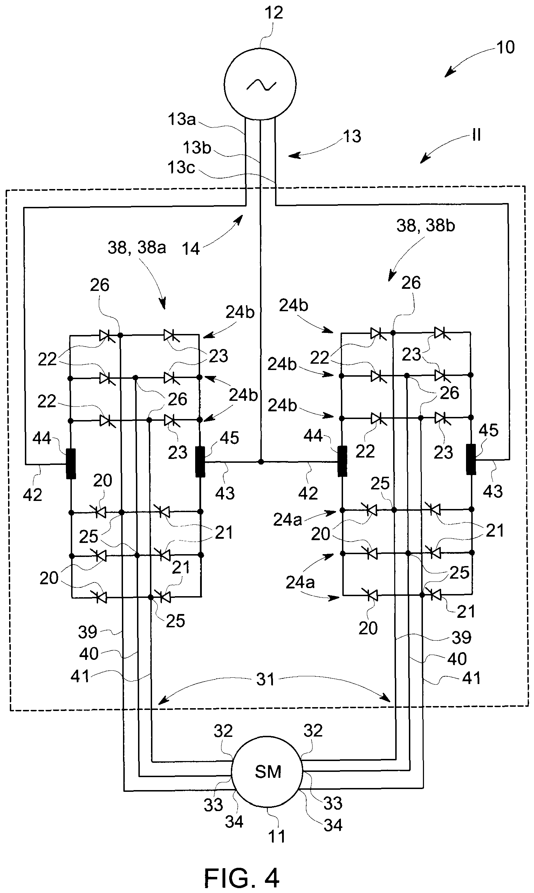

Zu der Konverterschaltung 15 gehört außerdem eine durch die Steuereinheit 16 ansteuerbare Umschaltanordnung 30. Die Umschaltanordnung 30 weist wenigstens einen Trennschalter und/oder wenigstens einen Umschalter auf, deren Schaltstellung mittels der Steuereinheit 16 einstellbar ist. Die Umschaltanordnung 30 ist dazu eingerichtet, die Konverterschaltung 15 zwischen einer Start-Konverterkonfiguration I und einer Direktkonverterkonfiguration II umzuschalten. Für das Ausführungsbeispiel der Konverterschaltung 15 aus Figur 2 ist in Figur 3 die Start-Konverterkonfiguration I und in Figur 4 die Direktkonverterkonfiguration II dargestellt.

An einen Konvertereingang 31 der Konverterschaltung 15 ist die Synchronmaschine 11 angeschlossen. Genauer weist die Ständerwicklung der Synchronmaschine 11 für jedes Polpaar drei Wicklungsstränge auf, die über drei Wicklungsanschlüsse 32, 33, 34 der Synchronmaschine 11 mit dem Konvertereingang 31 der Konverterschaltung 15 elektrisch verbunden sind. Die Wicklungsstränge können beispielsweise in einer Dreieckschaltung elektrisch zwischen die Wicklungsanschlüssen 32, 33, 34 geschaltet sein, wobei an jeder Wicklung eine Maschinenspannung UM1, UM2, UM3 anliegt, beispielsgemäß eine erste Maschinenspannung UM1 zwischen dem ersten Wicklungsanschluss 32 und dem zweiten Wicklungsanschluss 33, eine zweite Maschinenspannung UM2 zwischen dem zweiten Wicklungsanschluss 33 und dem dritten Wicklungsanschluss 34 und eine dritte Maschinenspannung UM3 zwischen dem dritten Wicklungsanschluss 34 und dem ersten Wicklungsanschluss 32. Die Maschinenspannung UM1, UM2, UM3 sind entsprechend ihrer in Drehrichtung des Rotors der Synchronmaschine 11 versetzten Anordnung der Wicklungen zueinander phasenverschoben.

Die Synchronmaschine 11 kann auch mehr als ein Polpaar aufweisen, wobei dann für jedes Polpaar drei Wicklungen mit drei Wicklungsanschlüssen vorhanden sind, was in Figur 1 gestrichelt für ein zweites Polpaar veranschaulicht ist.

In den Figuren 2 bis 4 ist ein Ausführungsbeispiel einer Betriebsschaltung 10 bzw. einer Konverterschaltung 15 und einer Umschaltanordnung 30 veranschaulicht. Die Polpaarzahl der verwendeten Synchronmaschine 11 beträgt p=2. Für jedes Polpaar weist die Konverterschaltung 15 einen und insbesondere genau einen Konverterzweig 38 auf. Somit ist beim Ausführungsbeispiel ein erster Konverterzweig 38a und ein zweiter Konverterzweig 38b vorhanden. Jeder Konverterzweig 38 weist beispielsgemäß drei Brückenschaltungen 24 auf. Jeder erster Brückenpunkt 25 einer Brückenschaltung 24 eines Konverterzweigs 38 ist mit einem separaten Eingangsanschluss des Konverterzweigs 38 verbunden, wobei beispielsgemäß ein erster Eingangsanschluss 39, ein zweiter Eingangsanschluss 40 und ein dritter Eingangsanschluss 41 jeweils mit einem ersten Brückenpunkt 25 einer der Brückenschaltungen 24 verbunden ist.

Alle Brückenzweige 24a, 24b derselben Konverterzweigs 38 sind an einem Ende mit einem ersten Ausgangsanschluss 42 und am entgegengesetzten Ende mit einem zweiten Ausgangsanschluss 43 des betreffenden Konverterzweigs 38 verbunden. Die ersten Konverterschalter 20 jedes ersten Brückenzweigs 24a sind über den ersten Ausgangsanschluss 42 mit den dritten Konverterschaltern 22 jedes zweiten Brückenzweigs 24b verbunden. Die zweiten Konverterschalter 21 jedes ersten Brückenzweigs 24a sind über den zweiten Ausgangsanschluss 43 mit den vierten Konverterschalter 23 jedes zweiten Brückenzweigs 24b verbunden.

Bei dem hier veranschaulichten Ausführungsbeispiel sind alle ersten Konverterschalter 20 desselben Konverterzweigs 38 über eine erste Drosselspule 44 mit den dritten Konverterschaltern 22 verbunden. Die zweiten Konverterschalter 21 sind jeweils über eine zweite Drosselspule 45 mit den vierten Konverterschaltern 23 desselben Konverterzweigs 38 verbunden. Außerdem ist die erste Drosselspule 44 unmittelbar mit dem ersten Ausgangsanschluss 42 und die zweite Drosselspule 45 unmittelbar mit dem zweiten Ausgangsanschluss 43 verbunden. Bei dem Ausführungsbeispiel gemäß der Figuren 2 bis 4 sind die Ausgangsanschlüsse 42, 43 durch jeweils eine Anzapfung 44a der ersten Drosselspule 44 bzw. eine Anzapfung 45a der zweiten Drosselspule 45 gebildet.

Die Umschaltanordnung 30 weist beim dargestellten Ausführungsbeispiel zwei Umschalter 50 und einen Unterbrecher 51 auf. Die drei ausgangsseitigen Anschlüsse des Unterbrechers 51 sind jeweils mit einem Leiter 13a, 13b, 13c der Leitung 13 verbunden. Eingangsseitig ist ein Anschluss des Unterbrechers 51 mit dem ersten Ausgangsanschluss 42 des ersten Konverterzweigs 38a und ein weiter Anschluss ist mit dem zweiten Ausgangsanschluss 43 des zweiten Konverterzweigs 38b verbunden. Ein dritter eingangsseitiger Anschluss des Unterbrechers 51 ist mit dem zweiten Ausgangsanschluss 43 des ersten Konverterzweigs 38a und mit dem ersten Ausgangsanschluss 42 des zweiten Konverterzweigs 38b verbunden, die miteinander verbunden sind und auf demselben Potential liegen.

Jedem Konverterzweig 38 ist ein Umschalter 50 zugeordnet, dessen drei eingangsseitige Anschlüsse jeweils mit einem zweiten Brückenpunkt 26 der drei Brückenschaltungen 24 des zugeordneten Konverterzweigs 38 verbunden sind. Jeder Umschalter 50 hat für jeden eingangsseitigen Anschluss zwei zugeordnete ausgangsseitige Anschlüsse, von denen der eine mit jeweils einem Eingangsanschluss 39, 40, 41 des zugeordneten Konverterzweigs 38 und der andere mit jeweils einem Leiter 13a, 13b, 13c der Leitung 13 verbunden ist. Somit können die zweiten Brückenpunkte 26 abhängig von der Schaltstellung des Umschalters 50 entweder mit dem jeweils ersten Brückenpunkt 25 derselben Brückenschaltung 24 unmittelbar elektrisch verbunden werden oder mit einem der Leiter 13a bzw. 13b bzw. 13c unmittelbar elektrisch verbunden werden.

Die Steuereinrichtung 16 stellt zum Schalten der Umschaltanordnung 30 abhängig von der Anzahl der separat anzusteuernden Schalter ein oder mehrere Umschaltsignale SU bereit, beispielsweise drei Umschaltsignale SU für die beiden Umschalter 50 und den Unterbrecher 51. Die Steuereinheit 16 stellt außerdem mehrere Konverterschaltsignale SK bereit, um die Konverterschalter 20, 21, 22, 23 anzusteuern und beispielsweise vom sperrenden in den leitenden Zustand zu schalten bzw. umgekehrt. Beispielsweise kann die Steuereinheit 16 für jeden vorhandenen Konverterschalter ein Konverterschaltsignal SK bereitstellen.

Die Konverterschalter 20, 21, 22, 23 sind beispielsgemäß durch jeweils einen Thyristor gebildet. Als Konverterschalter können auch andere ansteuerbare Halbleiterschalter verwendet werden. Es ist auch möglich, einen Konverterschalter durch mehrere Halbleiterschalter zu bilden, beispielsweise antiparallel geschaltete Thyristoren oder dergleichen. Als Konverterschalter können sämtliche bekannte Halbleiterschalter bzw. Halbleiterschalteranordnungen eingesetzt werden.

In Figur 3 ist das Ersatzschaltbild der Betriebsschaltung 10 in der Start-Konverterkonfiguration I veranschaulicht. Der Trennschalter 51 ist hier in seiner nicht leitenden Stellung und die Umschalter 50 verbinden die zweiten Brückenpunkte 26 der Brückenschaltungen 24 jeweils mit einem Leiter 13a bzw. 13b bzw. 13c der Leitung 13. Jeder Konverterzweig 38 der Konverterschaltung 15 bildet in der Start-Konverterkonfiguration I einen lastkommutierten Konverter mit einem Gleichstromzwischenkreis 52 an den Drosselspulen 44, 45. Die Steuereinheit 16 steuert die dritten Konverterschalter 22 und die vierten Konverterschalter 23 derart an, dass die am Konvertereingang 14 anliegende Wechselspannung des Spannungsversorgungsnetzes 12 in einen Gleichstrom zwischen der ersten Drosselspule 44 und der zweiten Drosselspule 45 gleichgerichtet wird. Die Steuereinheit 16 steuert die ersten Konverterschalter 20 und die zweiten Konverterschalter 21 derart an, dass der Gleichstrom im Gleichstromzwischenkreis 52 in einen Wechselstrom am Konverterausgang 31 mit einer vorgegebenen Wechselstromfrequenz wechselgerichtet wird. Dadurch kann die Synchronmaschine 11 durch Frequenzanlauf im Motorbetrieb bis zu einer Betriebsdrehzahl beschleunigt werden. Vorzugsweise bleibt die Start-Konverterkonfiguration I aufrecht erhalten, bis am Konverterausgang 31 ein Wechselstrom anliegt, die eine Wechselstromfrequenz von 50 Hz oder 120 Hz aufweist. Somit haben die Maschinenspannungen UM1, UM2, UM3 eine entsprechende Frequenz von 100 Hz oder 120 Hz, wenn der Anlauf der Synchronmaschine 11 abgeschlossen ist.

Nach diesem Anlauf wird die Konverterschaltung 15 in die Direktkonverterkonfiguration II umgeschaltet, die in Figur 4 veranschaulicht ist. Dazu wird der Unterbrecher 51 in seine leitende Stellung gebracht und verbindet die Leiter 13a, 13b, 13c der Leitung 13 am Konverterausgang 14 mit den Ausgangsanschlüssen 42, 43 der Konverterzweige 38. Die Umschalter 50 werden in eine Schaltstellung umgeschaltet, so dass jeweils der erste Brückenpunkt 25 mit dem zweiten Brückenpunkt 26 derselben Brückenschaltung 24 unmittelbar verbunden ist und auf demselben Potential liegt. Dadurch sind sowohl der erste Brückenpunkt 25, als auch der zweite Brückenpunkt 26 jeder Brückenschaltung 24 mit dem zugeordneten Eingangsanschluss 39 bzw. 40 bzw. 41 des Konverterzweigs 38 unmittelbar verbunden. Die Konverterschaltung 15 bildet in der Direktkonverterkonfiguration II einen Direktkonverter bzw. einen sogenannten Cyclo-Konverter. Die Steuereinheit 16 steuert die Konverterschalter 20, 21, 22, 23 in der Direktkonverterkonfiguration II derart an, dass die Maschinenspannungen UM1, UM2, UM3 direkt ohne Zwischengleichrichtung in eine am Konverterausgang 14 anliegende Wechselspannung mit einer definierten Wechselspannungsfrequenz von beispielsweise 50 Hz oder 60 Hz wechselgerichtet werden. Dies erfolgt direkt ohne Zwischengleichrichtung, so dass die Kondensatorschaltung 15 in der Direktkonverterkonfiguration II keinen Gleichstromzwischenkreis aufweist bzw. bildet.

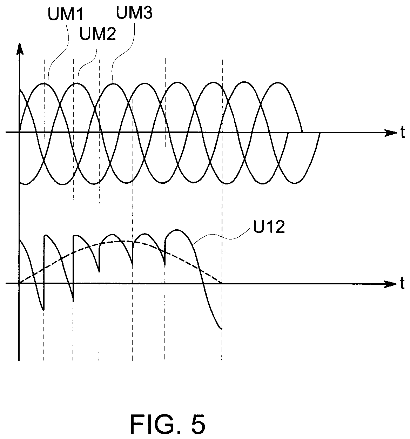

In Figur 5 ist stark schematisiert der Spannungsverlauf der Maschinenspannungen UM1, UM2, UM3 veranschaulicht. In der Direktkonverterkonfiguration II wird durch die Ansteuerung der Konverterschalter 20, 21, 22, 23 eine am Konverterausgang 14 anliegende Wechselspannung erzeugt, die abschnittsweise aus den zeitlichen Verläufen der drei Maschinenspannungen UM1, UM2, UM3 zusammengesetzt ist. Beispielhaft ist in Figur 5 eine erste Leiternennspannung U12 dargestellt. Figur 5 soll aber lediglich das Arbeitsprinzip der Konverterschaltung 15 in der Direktkonverterkonfiguration II veranschaulichen. Der tatsächliche Spannungsverlauf der Leiternennspannungen U12, U23, U31 kann abhängig von den gewählten Umschaltzeitpunkten und der Ansteuerung der Konverterschalter 20, 21, 22, 23 von der Prinzipdarstellung in Figur 5 abweichen.

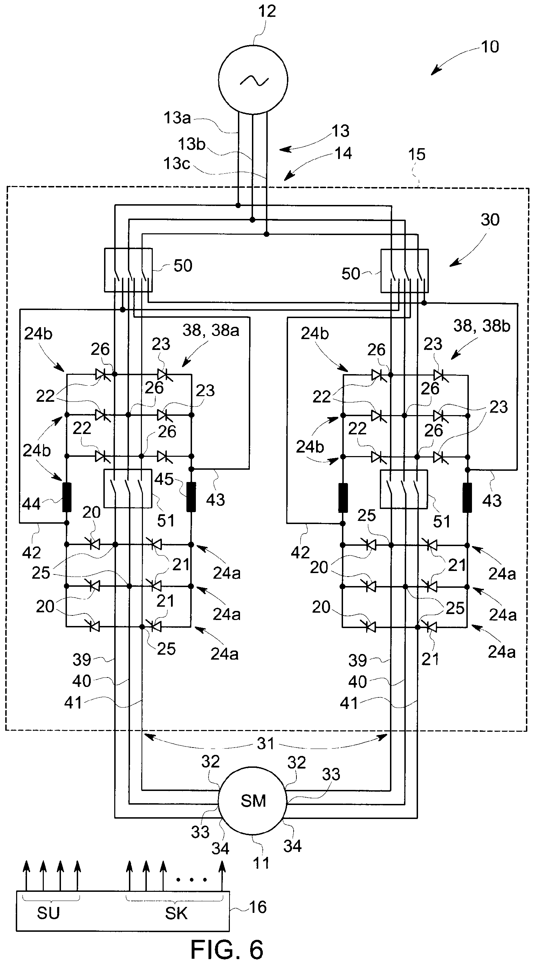

In Figur 6 ist ein abgewandeltes Ausführungsbeispiel der Konverterschaltung 15 veranschaulicht. Die Verbindung zwischen der Synchronmaschine 11 und den beiden Konverterzweigen 38 sowie der Aufbau der beiden Konverterzweige 38 ist gleich zu dem bislang beschriebenen Ausführungsbeispiel gemäß der Figuren 2 bis 4, so dass auf die vorstehende Erläuterung verwiesen werden kann. Der Aufbau der Umschaltanordnung 30 unterscheidet sich vom vorhergehenden Ausführungsbeispiel. Die Umschaltanordnung 30 weist beim Beispiel aus Figur 6 zwei Unterbrecher 51 auf, die jeweils einem Konverterzweig 38a bzw. 38b zugeordnet sind und jeweils in der Verbindung zwischen dem ersten Brückenpunkt 25 und dem zweiten Brückenpunkt 26 jeder Brückenschaltung 24 angeordnet sind. Jeder Unterbrecher 51 kann eine unmittelbar elektrische Verbindung zwischen dem ersten Brückenpunkt 25 und dem zweiten Brückenpunkt 26 aller Brückenschaltungen 24 des jeweiligen Konverterzweigs 38a bzw. 38b herstellen oder unterbrechen.

Zu der Umschaltanordnung 30 gehören bei diesem Ausführungsbeispiel außerdem zwei Umschalter 50, deren drei Ausgangsanschlüsse jeweils mit einem der drei Leiter 13a, 13b, 13c der Leitung 13 am Konverterausgang 14 verbunden sind. Jedem ausgangsseitigen Anschluss eines Umschalters 50 sind zwei eingangsseitige Anschlüsse zugeordnet, von denen einer mit jeweils einem der zweiten Brückenpunkte 26 des zugeordneten Konverterzweigs 38a oder 38b verbunden ist und von denen der jeweils andere mit einem ersten Ausgangsanschluss 42 oder einem zweiten Ausgangsanschluss 43 eines Konverterzweigs 38 verbunden ist. Beim Ausführungsbeispiel sind der erste Ausgangsanschluss 42 und der zweite Ausgangsanschluss 43 des ersten Konverterzweigs 38a, sowie der zweite Ausgangsanschluss 43 des zweiten Konverterzweigs 38b jeweils mit einem eingangsseitigen Anschluss des dem ersten Konverterzweigs 38a zugeordneten Umschalters 50 verbunden. Der erste Ausgangsanschluss 42 und der zweite Ausgangsanschluss 43 des zweiten Konverterzweigs 38b sowie der erste Ausgangsanschluss des ersten Konverterzweigs 38a sind mit jeweils einem eingangsseitigen Anschluss des Umschalters 50 verbunden, der dem zweiten Konverterzweig 38b zugeordnet ist.

Die Ausgangsanschlüsse 42, 43 sind anders als beim bisher beschriebenen Ausführungsbeispiel nicht durch Anzapfungen der Drosselspulen 44, 45 gebildet. Vielmehr ist der erste Ausgangsanschluss 42 jeweils durch den Verbindungspunkt der ersten Drosselspule 44 mit den ersten Brückenzweigen 24a gebildet und der zweite Ausgangsanschluss 43 ist durch den Verbindungspunkt der zweiten Drosselspule 45 mit zweiten Brückenzweigen 24b der Brückenschaltungen 24 gebildet.

Bei einem Ausführungsbeispiel gemäß Figur 6 wird die Konverterschaltung 15 in die Start-Konverterkonfiguration I umgeschaltet, indem die Umschalter den Konvertereingang 14 mit den zweiten Brückenpunkten 26 der Brückenschaltungen 24 verbinden und die Trennschalter 51 in ihrer nicht leitenden Stellung sind, so dass die ersten Brückenpunkte 25 und die zweiten Brückenpunkte 26 nicht unmittelbar miteinander verbunden sind. Im Ersatzschaltbild ergibt sich dadurch eine Schaltung, wie sie in Figur 3 veranschaulicht ist.

In der Direktkonverterkonfiguration II sind die Trennschalter 51 leitend und die Ausgangsanschlüsse 42, 43 der beiden Konverterzweige 38 werden über die Umschalter 50 mit dem Konverterausgang 40 elektrisch verbunden. Die Konverterschaltung 15 bildet einen Direktkonverter ohne Gleichstromzwischenkreis und arbeitet analog zu der Direktkonverterkonfiguration II gemäß dem vorherigen Ausführungsbeispiel aus Figur 4.

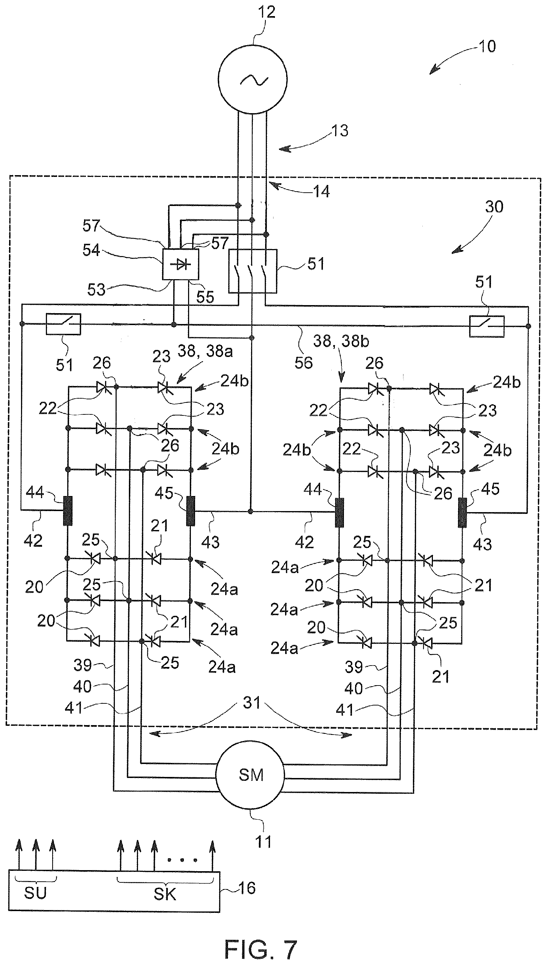

Eine weitere Abwandlung der Konverterschaltung 15 mit einer modifizierten Umschaltanordnung 30 ist in Figur 7 veranschaulicht. Im Unterschied zu den bisherigen Ausführungsbeispielen sind in jedem Konverterzweig 38 jeweils der erste Brückenpunkt 25 und der zweite Brückenpunkt 26 derselben Brückenschaltung 24 unmittelbar elektrisch miteinander und somit mit jeweils einem Eingangsanschluss 39, 40, 41 des Konverterzweigs 38a bzw. 38b verbunden. Die Ausgangsanschlüsse 42, 43 sind durch Anzapfungen der Drosselspulen 44, 45 gebildet und analog zu dem Ausführungsbeispiel gemäß den Figuren 2 bis 4 ausgeführt. Die Umschaltanordnung 30 weist analog zu dem in Figur 2 dargestellten Ausführungsbeispiel einen dreiphasigen Unterbrecher 51 zwischen dem Konverterausgang 14 und den Ausgangsanschlüssen 42, 43 auf. Auf die genaue Verbindung des Unterbrechers 51 mit den Ausgangsanschlüssen 42, 43 wird auf die Beschreibung im Zusammenhang mit Figur 2 verwiesen.

Außerdem weist die Umschaltanordnung 30 zwei weitere einphasige Unterbrecher 51 auf, die jeweils nur einen Eingangs- und Ausgangsanschluss aufweisen. Die beiden einphasigen Unterbrecher 51 sind in einer Reihenschaltung zwischen dem ersten Ausgangsanschluss 42 des ersten Konverterzweigs 38a und dem zweiten Ausgangsanschluss 43 des zweiten Konverterzweigs 38b angeordnet und mittels einer Verbindungsleitung 56 unmittelbar miteinander verbunden. Ein erster Gleichrichterausgang 53 einer Gleichrichterschaltung 54 ist mit der Verbindungsleitung 56 verbunden. Ein zweiter Gleichrichterausgang 55 der Gleichrichterschaltung 54 ist mit dem zweiten Ausgangsanschluss 43 des ersten Konverterzweigs 38a und dem ersten Ausgangsanschluss 42 des zweiten Konverterzweigs 38b verbunden. Die Gleichrichterschaltung 54 hat drei Gleichrichtereingänge 57, die jeweils mit dem Konverterausgang 14 und somit mit jeweils einem der Leiter 13a, 13b, 13c der Leitung 13 verbunden sind.

Die Steuereinheit 16 steuert die Umschaltanordnung 30 zur Bildung der Start-Konverterkonfiguration I derart an, dass die beiden einphasigen Unterbrecher 51 eine leitende Verbindung zwischen dem ersten Gleichrichterausgang 53 und dem jeweils zugeordneten Ausgangsanschluss 42 bzw. 43 der Konverterzweige 38 herstellen. Der dreiphasige Unterbrecher 51 zwischen dem Konverterausgang 14 und den Konverterzweigen 38 ist in seiner nicht leitenden Stellung, so dass die Gleichrichterschaltung 54 nicht überbrückt und mithin wirksam ist. Zum Anlaufen der Synchronmaschine 11 im Motorbetrieb wird die Wechselspannung am Kondensatorausgang 14 durch die Gleichrichterschaltung 53 gleichgerichtet und durch die Ansteuerung der dritten Konverterschalter 22 und vierten Konverterschalter 23 wechselgerichtet und am Konvertereingang 31 bereitgestellt. Die ersten Konverterschalter 20 und die zweiten Konverterschalter 21 können dabei in ihrer nicht leitenden Stellung verbleiben. In der Direktkonverterkonfiguration II wird der dreiphasige Unterbrecher 51 in seinen leitenden Zustand geschaltet und die beiden einphasigen Unterbrecher 51 werden in den nicht leitenden Zustand gebracht, so dass die Gleichrichterschaltung 54 unwirksam wird und die Ausgangsanschlüsse 42, 43 der Konverterzweige 38 mit dem Konverterausgang 14 verbunden sind. Durch geeignete Ansteuerung der Konverterschalter 20, 21, 22, 23 kann dann die am Konvertereingang 31 anliegende Wechselspannung, also die Maschinenspannungen UM1, UM2, UM3 ohne Gleichrichtung wechselgerichtet werden und eine Wechselspannung mit vorgegebener Frequenz am Konverterausgang 14 bereitgestellt werden.

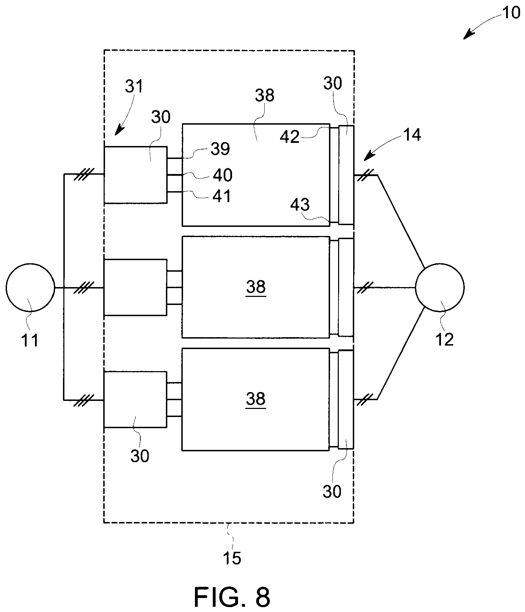

Bei den bisher beschriebenen Ausführungsbeispielen weist die Synchronmaschine 11 zwei Polpaare mit jeweils drei Wicklungen auf. In Figur 8 ist sehr schematisch eine Anordnung veranschaulicht, bei der eine Synchronmaschine 11 mit einem Polpaar verwendet wird. Dabei können jeweils zwei Phasen des Spannungsversorgungsnetzes 12 über die Umschaltanordnung 30 der Konverterschaltung 15 mit jeweils einem Konverterzweig 38 verknüpft werden. Am Konvertereingang 31 sind die drei Eingangsanschlüsse 39, 40, 41 jedes Konverterzweigs 38 mit den drei Wicklungsanschlüssen der Synchronmaschine 11 verbunden. Die in Figur 8 dargestellt Ausgestaltung kann anstelle von drei Konverterzweigen 38 auch sechs Konverterzweige 38 aufweisen.

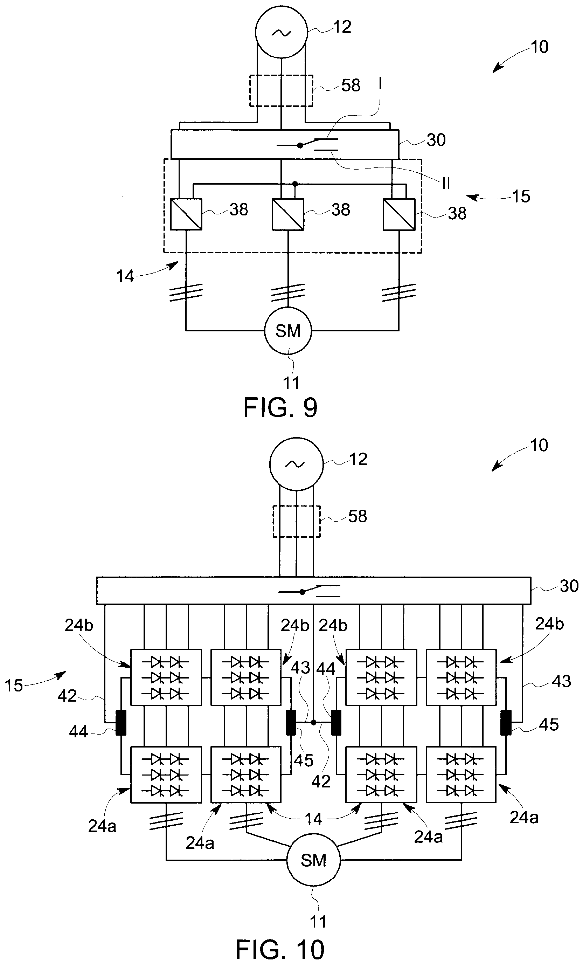

Figur 9 veranschaulicht ein Blockschaltbild eines weiteren Ausführungsbeispiels einer Betriebsschaltung 10 für eine Synchronmaschine 11 mit drei separaten Wicklungssystemen, wobei jedes Wicklungssystem drei Wicklungen aufweist. Die Wicklungssysteme sind um 20 Grad versetzt zueinander in der Synchronmaschine angeordnet und bilden damit eine entsprechende Phasenverschiebung zwischen den betreffenden Maschinenspannungen. Daraus ergibt sich ein sogenanntes 18-pulsiges System. Wie bei den vorher beschriebenen Ausführungsbeispielen kann die Konverterschaltung 15 zwischen der Start-Konverterkonfiguration I und der Direktkonverterkonfiguration II umgeschaltet werden. Jedes Wicklungssystem der Synchronmaschine 11 ist wie veranschaulicht mit einem Konverterzweig 38 verbunden, so dass hier anstelle von zwei Konverterzweigen 38, wie es bei den Ausführungsbeispielen gemäß der Figuren 2-4, 6 und 7 der Fall ist, drei parallele Konverterzweige 38 vorhanden sind.

Figur 10 zeigt ein Blockschaltbild eines Ausführungsbeispiels der Betriebsschaltung 10, bei dem eine Synchronmaschine 11 eingesetzt wird, die vier Wicklungssysteme mit jeweils drei Wicklungen aufweist, so dass sich ein 24-pulsiges System ergibt. Jedes dreiphasige Wicklungssystem ist an einen Konverterzweig 38 angeschlossen, wobei jeweils zwei Konverterzweige 38 zwischen dem ersten Ausgangsanschluss 42 und dem zweiten Ausgangsanschluss 43 in Reihe geschaltet sind. Dazu sind jeweils die ersten Brückenzweige 24a und die zweiten Brückenzweige 24b in Reihe geschaltet, wie es schematisch in Figur 10 veranschaulicht ist. Die vier Konverterzweige 38 bilden somit zwei erste Ausgangsanschlüsse 42 und zwei zweite Ausgangsanschlüsse 43, wobei zwei der Ausgangsanschlüsse 42, 43 - analog zum Ausführungsbeispiel gemäß der Figuren 2, 4 und 7 - elektrisch miteinander verbunden sind. Die Umschaltanordnung 30 kann analog zur Ausführung gemäß Figur 2 oder auch gemäß Figur 7 ausgebildet sein.

Wie es schematisch in den Figuren 9 und 10 dargestellt ist, kann in der Verbindung der Konverterschaltung 15 zum Spannungsversorgungsnetz 12 eine Filter- und/oder Drosselanordnung 58 angeordnet sein. Die Filter- und/oder Drosselanordnung 58 kann auch bei allen anderen Ausführungsbeispielen vorhanden sein. Sie kann eine Gleichtaktdrosselanordnung und/oder eine Filteranordnung aufweisen, um Störungen auf den dem Spannungsversorgungsnetz bereitgestellten Wechselspannungen zu beseitigen oder zumindest zu mindern.

Die Erfindung betrifft eine Betriebsschaltung 10 sowie ein Verfahren zum Betreiben einer Synchronmaschine 11 an einem Spannungsversorgungsnetz 12. Die Betriebsschaltung 10 hat eine Konverterschaltung 15 mit mehreren ansteuerbaren Konverterschaltern 20 bis 23 und einer ansteuerbaren Umschaltanordnung 30, die dazu eingerichtet ist, die Konverterschaltung 15 zwischen einer Start-Konverterkonfiguration I und einer Direktkonverterkonfiguration II umzuschalten. Das Spannungsversorgungsnetz 12 ist an einen Konverterausgang 14 und die Synchronmaschine 11 ist an einen Konvertereingang 31 der Konverterschaltung 15 angeschlossen. In der Direktkonverterkonfiguration II wird eine Wechselspannung am Konverterausgang 14 mit einer vorgegebenen Wechselspannungsfrequenz bereitgestellt. Die Steuereinheit 16 steuert die Konverterschalter 20 bis 23 derart an, dass die Wechselspannung am Konverterausgang 14 vorgegebenen Anforderungen entspricht. In der Direktkonverterkonfiguration II erfolgt das Wechselrichten der Wechselspannung zwischen dem Konvertereingang 31 und dem Konverterausgang 14 ohne Zwischengleichrichtung. Die Start-Konverterkonfiguration I dient zum Anlaufen der Synchronmaschine 11 im Motorbetrieb. Dazu wird vorzugsweise die am Konverterausgang 14 anliegende Wechselspannung des Spannungsversorgungsnetzes 12 in eine insbesondere zum Anlaufen des Motors geeignete Wechselspannung mit insbesondere variabler Frequenz am Konvertereingang 31 umgewandelt.

### Bezugszeichenliste:

- 10: Betriebsschaltung
- 11: Synchronmaschine
- 12: Spannungsversorgungsnetz
- 13: netzseitige Leitung
- 13a: erster Leiter der netzseitigen Leitung
- 13b: zweiter Leiter der netzseitigen Leitung
- 13c: dritter Leiter der netzseitigen Leitung
- 14: Konverterausgang
- 15: Konverterschaltung
- 16: Steuereinheit

- 20: ersten Konverterschalter
- 21: zweiten Konverterschalter
- 22: dritten Konverterschalter
- 23: vierten Konverterschalter
- 24: Brückenschaltung
- 25: erster Brückenpunkt
- 26: zweiter Brückenpunkt

- 30: Umschaltanordnung
- 31: Konvertereingang
- 32: erster Wicklungsanschluss
- 33: zweiter Wicklungsanschluss
- 34: dritter Wicklungsanschluss

- 38: Konverterzweig
- 38a: erster Konverterzweig
- 38b: zweiter Konverterzweig
- 39: erster Eingangsanschluss
- 40: zweiter Eingangsanschluss
- 41: dritter Eingangsanschluss
- 42: ersten Ausgangsanschluss
- 43: zweiten Ausgangsanschluss
- 44: erste Drosselspule
- 44a: Anzapfung der ersten Drosselspule
- 45: zweite Drosselspule
- 45a: Anzapfung der zweiten Drosselspule

- 50: Umschalter
- 51: Unterbrecher
- 52: Gleichstromzwischenkreis
- 53: ersten Gleichrichterausgang
- 54: Gleichrichterschaltung
- 55: zweiter Gleichrichterausgang
- 56: Verbindungsleitung
- 57: Gleichrichtereingang
- 58: Filter- und/oder Drosselanordnung

- I: Start-Konverterkonfiguration
- II: Direktkonverterkonfiguration

- L1: erster Außenleiter
- L2: zweiter Außenleiter
- L3: dritter Außenleiter
- N: Neutralleiter
- SK: Konverterschaltersignal
- SU: Umschaltsignal
- UL1: erste Phasennennspannung
- UL2: zweite Phasennennspannung
- UL3: dritte Phasennennspannung
- UL12: erste Leiternennspannung
- UL23: zweite Leiternennspannung
- UL31: dritte Leiternennspannung
- UM1: erste Maschinenspannung
- UM2: zweite Maschinenspannung
- UM3: dritte Maschinenspannung

## Patentansprüche

1. Betriebsschaltung (10) zur Kopplung einer Synchronmaschine (11) mit einem Spannungsnetz (12), mit einer von einer Steuereinheit (16) ansteuerbaren Konverterschaltung (15), die einen mit der Synchronmaschine (11) verbindbaren Konvertereingang (31) und einen mit dem Spannungsnetz (12) verbindbaren Konverterausgang (14) aufweist,
wobei die Konverterschaltung (15) mehrere von der Steuereinheit (16) ansteuerbare Konverterschalter (20, 21, 22, 23) und eine von der Steuereinheit (16) ansteuerbare Umschaltanordnung (30) aufweist, wobei die Konverterschaltung (15) mittels der Umschaltanordnung (30) zwischen einer Direktkonverterkonfiguration (II) und einer Start-Konverterkonfiguration (I) umschaltbar ist, wobei die Konverterschaltung (15) in der Start-Konverterkonfiguration (I) einen netzkommutierten und einen lastkommutierten Konverter bildet und die Steuereinheit zum Frequenzanlauf der Synchronmaschine (11) im Motorbetrieb eingerichtet ist und
wobei die Steuereinheit (16) dazu eingerichtet ist, die Konverterschaltung (15) in der Direktkonverterkonfiguration (II) abhängig vom Spannungsverlauf am Konvertereingang (31) zu steuern, um am Konverterausgang (14) eine Wechselspannung mit einer vorgegebenen Frequenz einzustellen, wobei die Synchronmaschine (11) im Generatorbetrieb arbeitet und elektrische Energie für das Spannungsnetz (12) bereitstellt,
wobei die Konverterschaltung (15) wenigstens zwei Konverterzweige (38) aufweist, die jeweils einen ersten Ausgangsanschluss (42) und einen zweiten Ausgangsanschluss (43) und jeweils einen ersten Eingangsanschluss (39), einen zweiten Eingangsanschluss (40) und einen dritten Eingangsanschluss (41) aufweisen,
und wobei jeder Konverterzweig (38) eine Brückenschaltung (24) mit vier ansteuerbaren Konverterschaltern (20, 21, 22, 23) für jeden Eingangsanschluss (39, 40, 41) aufweist, wobei ein erster Brückenpunkt (25) über einen ersten Konverterschalter (20) mit dem ersten Ausgangsanschluss (42) und über einen zweiten Konverterschalter (21) mit dem zweiten Ausgangsanschluss (43) verbunden ist, und wobei ein zweiter Brückenpunkt (26) über einen dritten Konverterschalter (22) mit dem ersten Ausgangsanschluss (42) und über einen vierten Konverterschalter (23) mit dem zweiten Ausgangsanschluss (43) verbunden ist.

2. Betriebsschaltung nach Anspruch 1,
**dadurch gekennzeichnet, dass** die Steuereinheit (16) dazu eingerichtet ist, die Konverterschaltung (15) in der Direktkonverterkonfiguration (II) abhängig vom Spannungsverlauf am Konvertereingang (31) zu steuern, um am Konverterausgang (14) eine Wechselspannung mit einem vorgegebenen Spannungswert einzustellen.

3. Betriebsschaltung nach Anspruch 1 oder 2,
**dadurch gekennzeichnet, dass** die Steuereinheit (16) dazu eingerichtet ist, die Konverterschaltung (15) in der Start-Konverterkonfiguration (I) derart zu steuern, dass die Frequenz der Spannung am Konvertereingang (31) gesteuert wird.

4. Betriebsschaltung nach Anspruch 3,
**dadurch gekennzeichnet, dass** die Steuereinrichtung (16) dazu eingerichtet ist, die Konverterschaltung (15) in der Start-Konverterkonfiguration (I) derart anzusteuern, dass die Frequenz der Wechselspannung am Konvertereingang (31) kontinuierlich bis zu einer Betriebsfrequenz erhöht wird.

5. Betriebsschaltung nach einem der vorhergehenden Ansprüche,
**dadurch gekennzeichnet, dass** die Konverterschaltung (15) in der Direktkonverterkonfiguration (II) einen Direktkonverter oder Cyclo-Konverter bildet.

6. Betriebsschaltung nach einem der vorhergehenden Ansprüche,
**dadurch gekennzeichnet, dass** die Konverterschaltung (15) in der Start-Konverterkonfiguration (I) wenigstens einen Gleichspannungszwischenkreis oder Gleichstromzwischenkreis (52) aufweist.

7. Betriebsschaltung nach Anspruch 6,
**dadurch gekennzeichnet, dass** die Steuereinrichtung (16) dazu eingerichtet ist, die Konverterschalter (20, 21, 22, 23) derart anzusteuern, dass die Spannung am Konverterausgang (14) zunächst in einen Gleichstrom oder eine Gleichspannung gleichgerichtet wird und anschließend in einen Wechselstrom oder eine Wechselspannung am Konvertereingang (31) wechselgerichtet wird.

8. Betriebsschaltung nach einem der vorhergehenden Ansprüche,
**dadurch gekennzeichnet, dass** zwei Ausgangsanschlüsse (42, 43) unterschiedlicher Konverterzweige (38) unmittelbar miteinander verbunden sind.

9. Betriebsschaltung nach einem der vorhergehenden Ansprüche,
**dadurch gekennzeichnet, dass** jeder Konverterzweig (38) eine erste Drosselspule (44) aufweist, die unmittelbar mit dem ersten Konverterschalter (20) und dem dritten Konverterschalter (22) verbunden ist, und dass jeder Konverterzweig (38) eine zweite Drosselspule (45) aufweist, die unmittelbar mit dem zweiten Konverterschalter (21) und dem vierten Konverterschalter (23) verbunden ist.

10. Betriebsschaltung nach Anspruch 9,
**dadurch gekennzeichnet, dass** jede Drosselspule (44, 45) in der Start-Konverterkonfiguration (I) der Konverterschaltung (15) in einem Gleichstromzwischenkreis (52) angeordnet ist.

11. Betriebsschaltung nach einem der vorhergehenden Ansprüche,
**dadurch gekennzeichnet, dass** in der Direktkonverterkonfiguration (II) der Konverterschaltung (15) die erste Drosselspule (44) mit dem ersten Ausgangsanschluss (42) und die zweite Drosselspule (45) mit dem zweiten Ausgangsanschluss (43) verbunden ist.

12. Verfahren zum Betreiben einer Synchronmaschine (11) mittels einer Betriebsschaltung (10) nach einem der vorhergehenden Ansprüche, mit folgenden Schritten:
- Umschalten der Konverterschaltung (15) in die Start-Konverterkonfiguration (I) mittels der Umschaltanordnung (30),
- Erhöhen der Drehzahl der Synchronmaschine (11), bis eine Wechselspannung am Konvertereingang (31) eine Betriebsfrequenz erreicht,
- Umschalten der Konverterschaltung (15) in die Direktkonverterkonfiguration (II) mittels der Umschaltanordnung (30).

## Claims

1. An operating circuit (10) for coupling a synchronous machine (11) with a voltage network (12), comprising
a converter circuit (15) which can be controlled by a control unit (16) and has a converter input (31) connectable to the synchronous machine (11) and a converter output (14) connectable to the voltage network (12),
wherein the converter circuit (15) comprises a plurality of converter switches (20, 21, 22, 23) controllable by the control unit (16) and a switching arrangement (30) controllable by the control unit (16), wherein the converter circuit (15) can be switched between a direct converter configuration (II) and a start converter configuration (I) by means of the switching arrangement (30),
wherein the converter circuit (15) in the start converter configuration (I) forms a network-commutated and a load-commutated converter and the control unit is arranged for a frequency start-up of the synchronous machine (11) in motor operation,
wherein the control unit (16) is configured to control the converter circuit (15) in the direct converter configuration (II) depending on the voltage profile at the converter input (31) in order to set an alternating voltage having a predetermined frequency at the converter output (14), wherein the synchronous machine (11) works in generator mode and provides electrical energy for the voltage network (12),
wherein the converter circuit (15) comprises at least two converter branches (38), each having a first output terminal (42) and a second output terminal (43) and each having a first input terminal (39), a second input terminal (40) and a third input terminal (41),
and wherein each converter branch (38) comprises a bridge circuit (24) with four controllable converter switches (20, 21, 22, 23) for each input terminal (39, 40, 41), wherein a first bridge point (25) is connected via a first converter switch (20) to the first output terminal (42) and via a second converter switch (21) to the second output terminal (43), and wherein a second bridge point (26) is connected via a third converter switch (22) to the first output terminal (42) and is connected to the second output terminal (43) via a fourth converter switch (23).

2. The operating circuit according to claim 1,
**characterized in that** the control unit (16) is configured to control the converter circuit (15) in the direct converter configuration (II) depending on the voltage profile at the converter input (31) in order to set an AC voltage having a predetermined voltage value at the converter output (14).

3. The operating circuit according to claim 1 or 2,
**characterized in that** the control unit (16) is configured to control the converter circuit (15) in the start converter configuration (I) such that the frequency of the voltage at the converter input (31) is controlled.

4. The operating circuit according to claim 3,
**characterized in that** the control unit (16) is configured to control the control circuit (15) in the start converter configuration (1) such that the frequency of the AC voltage at the converter input (31) is continuously increased up to an operating frequency.

5. The operating circuit according to anyone of the preceding claims,
**characterized in that** the converter circuit (15) in the direct converter configuration (II) forms a direct converter or cycloconverter.

6. The operating circuit according to anyone of the preceding claims,
**characterized in that** the converter circuit (15) in the start converter configuration (I) has at least one DC voltage intermediate circuit or DC intermediate circuit (52).

7. The operating circuit according to claim 6,
**Characterized in that** the control unit (16) is configured to control the converter switches (20 21, 22, 23) such that the voltage at the converter output (14) is first rectified into a direct current or a direct voltage and is then inverted into an alternating current or an alternating voltage at the converter input (31).

8. The operating circuit according to anyone of the preceding claims,
**characterized in that** two output terminals (42, 43) of different converter branches (38) are connected directly to one another.

9. The operating circuit according to anyone of the preceding claims,
**characterized in that** each converter branch (38) has a first choke coil (44) connected directly to the first converter switch (20) and the third converter switch (22) and **in that** each converter branch (38) has a second choke coil (45) connected directly to the second converter switch (21) and the fourth converter switch (23).

10. The operating circuit according to claim 9,
**characterized in that** each choke coil (44, 45) in the start converter configuration (I) of the converter circuit (15) is arranged in a DC intermediate circuit (52).

11. The operating circuit according to anyone of the preceding claims,
**characterized in that**, in the direct converter configuration (II) of the converter circuit (15), the first choke coil (44) is connected to the first output terminal (42) and the second choke coil (45) is connected to the second output terminal (43).

12. A method for operating a synchronous machine (11) by means of an operating circuit (10) according to anyone of the preceding claims, comprising the following steps:
- switching the converter circuit (15) into the start converter configuration (I) by means of the switching arrangement (30),
- increasing the speed of the synchronous machine (11) until an AC voltage at the converter input (31) reaches an operating frequency,
- switching the converter circuit (15) into the direct converter configuration (II) by means of the switching arrangement (30).

## Revendications

1. Circuit de fonctionnement (10) pour le couplage d'un moteur synchrone (11) à un réseau de tension (12),
avec un circuit convertisseur (15) pouvant être commandé par un dispositif de commande (16), qui présente une entrée de convertisseur (31) pouvant être reliée au moteur synchrone (11) et une sortie de convertisseur (14) pouvant être reliée au réseau de tension (12),
dans lequel le circuit de convertisseur (15) présente plusieurs commutateurs de convertisseur (20, 21, 22, 23) pouvant être commandés par le dispositif de commande (16) et un agencement de commutation (30) pouvant être commandé par le dispositif de commande (16), dans lequel le circuit de convertisseur (15) peut être commuté au moyen de l'agencement de commutation (30) entre une configuration de convertisseur direct (II) et une configuration de convertisseur de démarrage (I),
dans lequel le circuit de convertisseur (15) forme, dans la configuration de convertisseur de démarrage (I), un convertisseur à commutation par le réseau et un convertisseur à commutation par la charge, et le dispositif de commande est conçu pour le démarrage en fréquence du moteur synchrone (11) en fonctionnement de moteur, et dans lequel le dispositif de commande (16) est conçue pour commander le circuit de convertisseur (15) dans la configuration de convertisseur direct (II) en fonction de la courbe de tension à l'entrée de convertisseur (31) afin de commander, à la sortie de convertisseur (14), une tension alternative avec une fréquence prédéfinie, dans lequel le moteur synchrone (11) fonctionne en mode générateur et fournit de l'énergie électrique pour le réseau de tension (12),
dans lequel le circuit de convertisseur (15) présente au moins deux branches de convertisseur (38), qui présentent respectivement une première borne de sortie (42) et une seconde borne de sortie (43) et respectivement une première borne d'entrée (39), une deuxième borne d'entrée (40) et une troisième borne d'entrée (41),
et dans lequel chaque branche de convertisseur (38) présente un circuit en pont (24) avec quatre commutateurs de convertisseur (20, 21, 22, 23) pouvant être commandés pour chaque borne d'entrée (39, 40, 41), dans lequel un premier point de pont (25) est relié par un premier commutateur de convertisseur (20) à la première borne de sortie (42) et par un deuxième commutateur de convertisseur (21) à la seconde borne de sortie (43), et dans lequel un second point de pontage (26) est relié à la première borne de sortie (42) via un troisième commutateur de convertisseur (22) et à la seconde borne de sortie (43) via un quatrième commutateur de convertisseur (23).

2. Circuit de fonctionnement selon la revendication 1,
**caractérisé en ce que** le dispositif de commande (16) est conçue pour commander le circuit de convertisseur (15) dans la configuration de convertisseur direct (II) en fonction de la courbe de tension à l'entrée de convertisseur (31) afin d'établir une tension alternative à la sortie de convertisseur (14) avec une valeur de tension prédéterminée.

3. Circuit de fonctionnement selon la revendication 1 ou 2,
**caractérisé en ce que** le dispositif de commande (16) est conçu pour commander le circuit de convertisseur (15) dans la configuration de convertisseur de démarrage (I) de telle sorte
que la fréquence de la tension à l'entrée de convertisseur (31) est commandée.

4. Circuit de fonctionnement selon la revendication 3,
**caractérisé en ce que** le dispositif de commande (16) est adapté pour commander le circuit de convertisseur (15) dans la configuration de convertisseur de démarrage (I) de telle sorte que la fréquence de la tension alternative à l'entrée de convertisseur (31) est augmentée en continu jusqu'à une fréquence de fonctionnement.

5. Circuit de fonctionnement selon l'une quelconque des revendications précédentes,
**caractérisé en ce que** le circuit de convertisseur (15) forme un convertisseur direct ou un cyclo-convertisseur dans la configuration de convertisseur direct (II).

6. Circuit de fonctionnement selon l'une quelconque des revendications précédentes,
**caractérisé en ce que** le circuit de convertisseur (15) comprend au moins un circuit intermédiaire de tension continue ou un circuit intermédiaire de courant continu (52) dans la configuration de convertisseur de démarrage (I).

7. Circuit de fonctionnement selon la revendication 6,
**caractérisé en ce que** le dispositif de commande (16) est conçu pour commander les commutateurs de convertisseur (20, 21, 22, 23) de sorte que la tension à la sortie de convertisseur (14) est d'abord redressée en un courant continu ou une tension continue et est ensuite redressée en un courant alternatif ou une tension alternative à l'entrée de convertisseur (31).

8. Circuit de fonctionnement selon l'une quelconque des revendications précédentes,
**caractérisé en ce que** deux bornes de sortie (42, 43) de différentes branches de convertisseur (38) sont directement reliées entre elles.

9. Circuit de fonctionnement selon l'une quelconque des revendications précédentes,
**caractérisé en ce que** chaque branche de convertisseur (38) présente une première bobine d'arrêt (44) qui est directement reliée au premier commutateur de convertisseur (20) et au troisième commutateur de convertisseur (22), et **en ce que** chaque branche de convertisseur (38) présente une seconde bobine d'arrêt (45) qui est directement reliée au deuxième commutateur de convertisseur (21) et au quatrième commutateur de convertisseur (23).

10. Circuit de fonctionnement selon la revendication 9,
**caractérisé en ce que** chaque bobine d'arrêt (44, 45) est agencée dans un circuit intermédiaire de courant continu (52) dans la configuration de convertisseur de démarrage (I) du circuit de convertisseur (15).

11. Circuit de fonctionnement selon l'une quelconque des revendications précédentes,
**caractérisé en ce que**, dans la configuration de convertisseur direct (II) du circuit de convertisseur (15), la première bobine d'arrêt (44) est reliée à la première borne de sortie (42) et la seconde bobine d'arrêt (45) est reliée à la seconde borne de sortie (43).

12. Procédé pour faire fonctionner un moteur synchrone (11) au moyen d'un circuit de fonctionnement (10) selon l'une quelconque des revendications précédentes, comprenant les étapes suivantes :
- commutation du circuit de convertisseur (15) dans la configuration de convertisseur de démarrage (I) au moyen de l'agencement de commutation (30),
- augmentation de la vitesse de rotation du moteur synchrone (11) jusqu'à ce qu'une tension alternative à l'entrée de convertisseur (31) atteigne une fréquence de fonctionnement,
- commutation du circuit de convertisseur (15) dans la configuration de convertisseur direct (II) au moyen de l'agencement de commutation (30).
